# EUROPÄISCHE PATENTSCHRIFT

(11) **EP 2 701 940 B1**
(45) Veröffentlichungstag und Bekanntmachung des Hinweises auf die Patenterteilung: **13.09.2017**
(21) Anmeldenummer: 12727329.0
(22) Anmeldetag: 23.05.2012
(51) Int. Cl.: B60L 5/19, B60L 5/36, B60L 5/08

(54) **NICHT SCHIENENGEBUNDENES FAHRZEUG MIT EINEM STROHMABNEHMER**
NON-RAILBOUND VEHICLE
VÉHICULE NON FERROVIAIRE

(30) Priorität: 27.05.2011 DE 102011076623
(43) Veröffentlichungstag der Anmeldung: 05.03.2014
(73) Patentinhaber: Siemens Aktiengesellschaft, 80333 München (DE)
(72) Erfinder: FRANCKE, Jürgen, 12524 Berlin (DE); GERSTENBERG, Frank, 10409 Berlin (DE)
(86) Internationale Anmeldenummer: PCT/EP2012/059613
(87) Internationale Veröffentlichungsnummer: WO 2012/163763

(56) Entgegenhaltungen:
- WO-A1-93/11960
- CH-A- 217 666
- DE-A1- 2 600 158
- FR-A- 881 611
- JP-A- S5 271 011
- US-A- 5 124 510

## Beschreibung

Nicht schienengebundenes Fahrzeug mit einem Stromabnehmer Die Erfindung betrifft ein nicht schienengebundenes Fahrzeug nach dem Oberbegriff des Patentanspruches 1.
Bei schienengebundenen Elektrofahrzeugen, wie z.B. elektrische Lokomotiven, Züge und Straßenbahnen, erfolgt die Versorgung mit elektrischer Energie über ein spurtreues Fahrleitungssystem, welches passend zum Schienenverlauf angeordnet ist. Elektrische Schienenfahrzeuge kommen dabei mit nur einem spannungsführenden Hinleiter aus, während der Rückleiter durch die Schienen gebildet wird. Der Hinleiter kann als Fahrdraht einer Oberleitungsanlage oder auch als Stromschiene, die unmittelbar neben der Fahrspur oder auch Unterflur angeordnet ist, ausgebildet sein. Weitaus komplizierter stellt sich hingegen die Energieversorgung von nicht schienengebundenen Fahrzeugen dar. Einerseits muss der Rückleiter als gesonderter Fahrdraht der Oberleitung neben dem Hinleiter installiert werden. Andererseits besteht eine große Schwankungsbreite nicht schienengebundener Fahrzeuge innerhalb ihrer Fahrspur.

Aus der Offenlegungsschrift DE 26 00 158 A1 ist ein nicht schienengebundenes Fahrzeug nach dem Oberbegriff des Anspruchs 1 mit einer Vorrichtung für einen Oberleitungsbus zur Stromabnahme von Oberleitungsdrähten bekannt. Sie weist ein Paar Stromabnehmerarme auf, von denen jeder von einem zugehörigen Teilrahmen getragen wird, der schwenkbar am Fahrzeug angelenkt ist. Jeder Stromabnehmerarm ist an seinem vorderen Ende schwenkbar und wird von einer Luftfeder gehalten. Die zwei Teilrahmen sind über einen Antriebsträger miteinander verbunden. Ein Gleitbügel überbrückt die beiden Stromabnehmerarme an dem den Oberleitungsdrähten benachbarten Enden. Der Gleitbügel wird mittels Drehzapfenverbindungen schwenkbar an den Oberleitungsdrähten gehalten. Der Antriebsträger ist mit einem Servomechanismus verbunden, der das durch den Gleitbügel, die Stromabnehmerarme und den Antriebsträger gebildete Parallelogramm in die durch Fühlereinrichtungen bestimmte Position bringt, um zu erreichen, dass der Gleitbügel den Oberleitungsdrähten nachgeführt wird. Die Antriebsenergie wird über ein Paar Kontaktorgane auf dem Gleitbügel zugeführt. Zur Steuerung des Servomechanismus sind auf dem Gleitbügel ferner zwei als Fühlereinrichtungen ausgebildete Kontaktpaare um die normale Position der Oberleitungsdrähte angeordnet.

So ist beispielsweise aus der Patentschrift DE 32 44 945 C1 ein doppelpoliges Oberleitungssystem für elektrisch angetriebene Fahrzeuge des öffentlichen Personennahverkehrs bekannt. Von den zwei parallel verlaufenden Oberleitungsdrähten ist einer gegenüber Erde spannungsführend und der andere dient als Nullleiter. Ein O-Bus ist mit einem Paar von Stangenstromabnehmern ausgerüstet, um in dem Oberleitungssystem verkehren zu können. Im Betrieb nimmt das Paar von Stangenstromabnehmern einen aufgerichteten Zustand ein, in dem ihre Gleitschuhe ordnungsgemäß an den beiden Oberleitungsdrähten anliegen. Die Stromabnehmerstangen stehen unter der Kraft einer Aufrichtfeder, die für den nötigen Andruck der Gleitschuhe an die Oberleitungsdrähte sorgt. Die Stangenstromabnehmer sind am Dach des O-Busses um eine horizontale und quer zur Fahrtrichtung verlaufende Achse angelenkt, um abgesenkt und wieder hochgefahren werden zu können. Zur Kompensation von seitlichen Fahrabweichungen relativ zum Verlauf der Oberleitungsdrähte sind die Stangenstromabnehmer auch um eine vertikale Achse drehbar, um den Gleitkontakt zu den Oberleitungsdrähten halten zu können. O-Busse sind jedoch spurgebundene Fahrzeuge, da starke Ausweichmanöver oder Überholmanöver, die ein Verlassen der Fahrspur bedingen, zu einem Kontaktverlust der Stangenstromabnehmer mit den Oberleitungsdrähten führt.

Die Offenlegungsschrift DE 102 56 705 A1 offenbart ein nicht schienengebundenes Fahrzeug, wie sie als Lastwagen im Tagebau zum Transport von Erz, Kohle oder Abraum eingesetzt werden. Zur Versorgung eines Elektromotors des Fahrzeugs sind zwei Pantografen vorhanden, die im Betrieb über Schleifleisten mit Fahrdrähten einer zweipoligen Oberleitung in Kontakt stehen. Damit das Fahrzeug stets nur so gelenkt wird, dass die Schleifleisten die Fahrdrähte nicht verlassen, sind an den Pantografen Sensorleisten angeordnet, die Magnetfeldsensoren tragen. Diese bestimmen die magnetische Feldstärke des vom Strom im Fahrdraht erzeugten Magnetfeldes so genau, dass aus dem gemessenen Feldstärkewert der Abstand des Sensors zum Fahrdraht bestimmt werden kann. Die Information über die Position des Sensors relativ zum Fahrdraht und damit über die Position des Pantografen und damit des gesamten Fahrzeugs zum Fahrdraht kann mittels einer Anzeigeeinheit dem Fahrzeugführer mitgeteilt werden, so dass dieser sofort geeignete Lenkbewegungen ausführen kann. Es ist auch möglich, die Informationen der Sensoren einer Steuereinheit für eine automatische Lenkung des Fahrzeuges zuzuführen.

Die von O-Bussen bekannten Stangenstromabnehmer leiden unter dem Nachteil, dass ein An- und Abdrahten von Fahrzeugen relativ schwierig ist und dass bei ruckartigen Lenkbewegungen es zu so genannten Stangenentgleisungen, d.h. zu einem Kontaktverlust der Gleitschuhe von den Oberleitungsdrähten, kommen kann. Damit ist dieses System ungeeignet für Fahrbahnen, die eine wenigstens streckenweise elektrifizierte Fahrspur aufweisen, zu der parallel nicht elektrifizierte Fahrspuren - beispielsweise auf mehrspurigen Autobahnen - verlaufen. Schließlich sind Stangenstromabnehmer auch unsicher bei höheren Fahrgeschwindigkeiten von 80 bis 100 km/h, wie sie von Nutzfahrzeugen auf Autobahnen gefahren werden dürfen.

Die von Tagebaufahrzeugen bekannte Lösung mit je einem Stromabnehmer pro Fahrdraht hat auch den Nachteil, dass größere seitliche Fahrzeugbewegungen von über 0,4 m zu einem Kontaktverlust mit der Oberleitung führen können. Um solche Kontaktverluste zu vermeiden, kann die Stromabnehmeranordnung auch breiter als das Fahrzeug gestaltet werden, was auf öffentlichen Straßen außerhalb eines Tagebauareals gefährlich und gemäß Straßenverkehrsordnung nicht zulässig ist.

Der Erfindung liegt daher die Aufgabe zugrunde, ein gattungsgemäßes Fahrzeug bereitzustellen, dessen Stromabnehmer beim Betrieb auf mehrspurigen Fahrbahnen mit einer wenigstens abschnittsweise elektrifizierten Fahrspur auch bei höheren Fahrgeschwindigkeiten von beispielsweise 80 bis 100 km/h sicher an- und abdrahtbar ist und zuverlässig den Kontakt zum Fahrdraht halten kann.

Die Aufgabe wird erfindungsgemäß gelöst durch ein nicht schienengebundenes Fahrzeug der eingangs genannten Art mit den im kennzeichnenden Teil des Patentanspruches 1 angegebenen Merkmalen. Demnach weist der Stromabnehmer zwei Tragausleger auf, die jeweils am Fahrzeug und an einer die Schleifleisten tragenden Wippe derart kipp- und schwenkbar angelenkt sind, dass die Wippe sowohl anheb- und absenkbar als auch quer zur Fahrtrichtung bewegbar ist. Durch diese Bewegungsfreiheitsgrade der Wippe wird sowohl ein einfaches automatisches An- bzw. Abdrahten ermöglicht als auch ein permanenter Ausgleich von Spurungenauigkeiten durch Querbewegung der Wippe. Damit kann auch bei hohen Fahrgeschwindigkeiten von bis zu 100 km/h sicher der Kontakt des Stromabnehmers mit den Oberleitungsfahrdrähten gehalten werden. Die Schleifleisten der Wippe erstrecken sich dabei horizontal und quer zur Fahrtrichtung des Fahrzeugs. Die Wippe weist dabei einen lateralen Arbeitsbereich auf, der durch die Länge der Schleifleisten gegeben ist. Über diesen Arbeitsbereich beschleift die Wippe die Fahrdrähte, um Traktionsenergie für das Fahrzeug bereitzustellen. Der Stromabnehmer ist in einem Übergangsbereich von einer Fahrerkabine zu einem Ladeaufbau am Fahrzeug angelenkt. Hierdurch ist eine Anlenkung des Stromabnehmers entweder direkt am Fahrgestell des Fahrzeugs oder an einem mit diesem verbundenen Behälter möglich, um den Stromabnehmer stabil zu befestigen und um schwingungstechnisch von Ladeaufbau und Fahrerkabine weitgehend entkoppelt zu sein. Die dadurch bedingte geringe Bauhöhe des Stromabnehmers ermöglicht eine günstige Massenverteilung, die wenig Einfluss auf die Fahrdynamik des erfindungsgemäßen Fahrzeugs hat. Die Tragausleger erstrecken sich vom Fahrzeug zur abgesenkten Wippe in Fahrtrichtung, während sie bei Kontaktierung der Fahrdrähte durch die Wippe mit der Fahrtrichtung einen spitzen Winkel einschließen. Durch die nach vorne über die Fahrerkabine gerichteten Ausleger kommt der Stromabnehmer nicht in Konflikt mit einem hohen Ladeaufbau des Fahrzeugs. Die Wippe wird bei dieser Ausgestaltung durch die Ausleger geschoben, was durch die Verwendung von Schleifleisten mit deren geringem Krafteintrag auf die Fahrdrähte möglich ist.

In einer vorteilhaften Ausführungsform des erfindungsgemäßen Fahrzeugs weist der Stromabnehmer einen Stellausleger auf, der parallel zu den Tragauslegern an Fahrzeug und Wippe jeweils kipp- und schwenkbar angelenkt und fahrzeugseitig derart an einen Stellantrieb gekoppelt ist, dass durch diesen der Stellausleger und damit die Wippe seitlich schwenkbar ist. Der Stellantrieb ermöglicht eine Drehbewegung um eine vertikale Drehachse, die drehfest mit dem Stellausleger verbunden ist. Durch deren Kopplung folgen die Tragausleger der Schwenkbewegung des Stellauslegers, die durch die Wippe des Stromabnehmers parallel zueinander geführt sind.

In einer bevorzugten Ausgestaltung des erfindungsgemäßen Fahrzeugs weist die Wippe je Fahrdraht zwei in Fahrtrichtung hintereinander angeordnete Schleifleisten auf, die quer Fahrtrichtung ausgerichtet sind und einen zum Beschleifen des Fahrdrahtes vorgesehenen Soll-Arbeitsbereich aufweisen. Die vier Schleifleisten liegen im normalen Betriebszustand etwa in einer horizontalen Ebene gemeinsam mit den befahrenen Fahrdrähten. Durch die Länge der Schleifleisten wird ein Arbeitsbereich definiert, innerhalb dessen Schleifkontakt zu dem jeweiligen Fahrdraht erlaubt ist. Damit dieser Soll-Arbeitsbereich bei Fahrungenauigkeiten aus der Spurmitte nicht verlassen wird, kann die Wippe mit Hilfe des Stellantriebes durch seitliche Schwenkbewegung nachgeführt werden.

In einer weiteren vorteilhaften Ausführungsform des erfindungsgemäßen Fahrzeugs ist jeder Tragausleger mit einer Aufrichtfeder gekoppelt, deren Rückstellkraft die Wippe anhebt und die Schleifleisten an die Fahrdrähte drückt. Durch diese Zugfedern kann sowohl die Anhebebeschleunigung der Wippe als auch deren Anpressdruck gegen den Fahrdraht eingestellt werden.

In einer weiteren vorteilhaften Ausgestaltung weist das erfindungsgemäße Fahrzeug einen Lagesensor zur Erfassung einer Ist-Lage des Fahrzeugs relativ zu den Fahrdrähten auf. Dieser Lagesensor kann beispielsweise durch eine Videokamera, die am Fahrzeug befestigt ist und mit einer Bildauswertungseinheit verknüpft ist, gebildet werden, wodurch kontinuierlich die Spurtreue des sich bewegenden Fahrzeugs überwacht wird. Durch Vergleich mit einem Referenzbild, welches sich beispielsweise bei einer spurmittigen Fahrweise ergibt, kann ein Maß für die seitliche Spurabweichung des Fahrzeugs ermittelt werden, um dieses einer Regelungseinrichtung zuzuführen.

Vorzugsweise umfasst das erfindungsgemäße Fahrzeug eine Regelungseinrichtung, die dazu ausgebildet ist, aus einem Vergleich der erfassten Ist-Lage mit einer vorgegebenen Soll-Lage des Fahrzeugs relativ zu den Fahrdrähten eine Stellgröße für die Wippe zu bestimmen, welche eine Kontaktierung der Fahrdrähte innerhalb eines Arbeitsbereiches der Schleifleisten aufrecht erhält, und den Stellantriebe entsprechend der bestimmten Stellgröße anzusteuern. Mit Hilfe der Regelungseinrichtung können automatisch seitliche Fahrungenauigkeiten, die einen bauartbedingten Grenzwert nicht überschreiten, automatisch kompensiert werden, so dass die Fahrdrähte stets innerhalb der Arbeitsbereiche der Schleifleisten beschliffen werden.

Weiter vorzugsweise ist die Regelungseinrichtung des erfindungsgemäßen Fahrzeugs dazu ausgebildet, den Stellantrieb derart anzusteuern, dass durch eine pendelnde Schwenkbewegung der Wippe die Schleifleisten auf ihrem Arbeitsbereich gleichmäßig abgeschliffen werden. Beispielsweise kann bei gerader Fahrbahnführung auf eine aufwändige Zickzackführung der Fahrdrähte zur gleichmäßigen Beschleifung der Schleifleisten verzichtet werden, indem über die Regelungseinrichtung diese relative Zickzackbewegung über ein seitliches Hin- und Herpendeln der Wippe ersetzt.

Weitere Vorteile und Eigenschaften des erfindungsgemäßen Fahrzeugs ergeben sich aus nachfolgender Beschreibung eines Ausführungsbeispiels, welches anhand der Zeichnungen näher erläutert wird, in deren
- FIG 1: ein erfindungsgemäßes Fahrzeug in Frontansicht entgegen der Fahrtrichtung,
- FIG 2: der Stromabnehmer des Fahrzeugs nach FIG 1 in Draufsicht,
- FIG 3: der Stromabnehmer des Fahrzeugs nach FIG 1 in Seitenansicht und
- FIG 4: ein erfindungsgemäßes Fahrzeug in Seitenansicht
schematisch veranschaulicht sind.

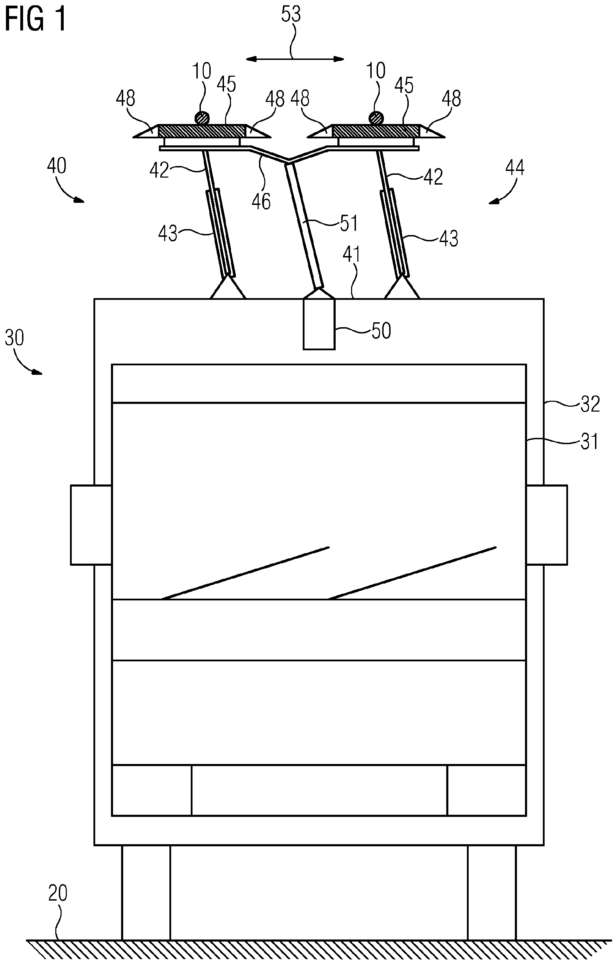

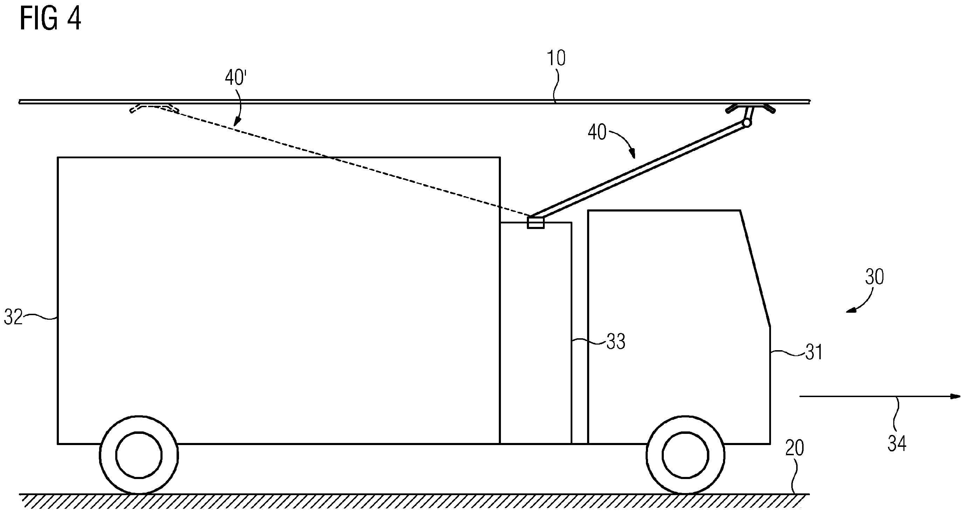

Gemäß FIG 1 und FIG 4 ist eine zweipolige Oberleitung mit einem Hinleiter und einem zu diesem parallel verlaufenden Rückleiter als Fahrdrähte 10 zur Elektrifizierung einer Fahrspur 20 vorgesehen. Sie sind mittels nicht dargestellter Infrastruktureinrichtungen, wie Masten, Ausleger, Seitenhalter, Tragseile, Hänger u.dgl., etwa mittig oberhalb der Fahrspur 20 angeordnet. Die Fahrspur 20 kann beispielsweise die rechte Fahrspur einer mehrspurigen Autobahn sein. Hierdurch ist es möglich, in Fahrzeuge 30 mittels eines Stromabnehmers 40 elektrische Energie einzuspeisen, um einen Elektro- oder Hybridantrieb des Fahrzeugs 30 Traktionsenergie bereitzustellen oder um Bremsenergie des Fahrzeugs 30 an die Oberleitung abzuführen.

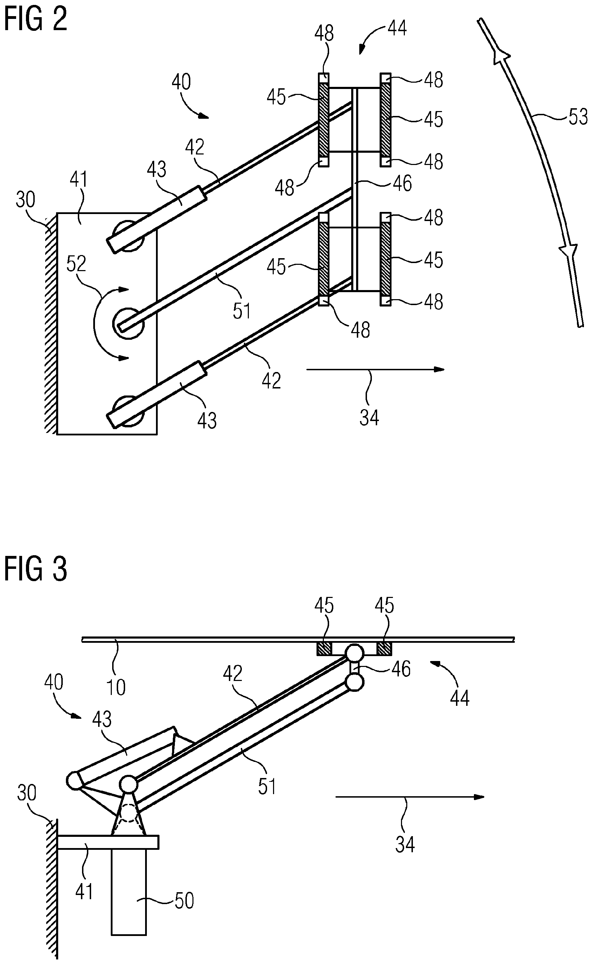

Gemäß FIG 1 bis FIG 3 ist der Stromabnehmer 40 auf einer am Fahrzeug 30 befestigen Plattform 41 gelagert. Die Plattform 41 kann als rechteckige Platte ausgebildet sein, auf welcher Dreh-Kipp-Gelenke sitzen, über die zwei Tragausleger 42 sowie ein Stellausleger 51 am Fahrzeug 30 angelenkt sind. Die Ausleger 42 bzw. 51 sind dabei um je eine horizontale Achse kippbar, so dass eine von den Tragauslegern 42 getragene Wippe 44 des Stromabnehmers 40 vertikal anheb- und absenkbar ist. Hierzu ist jeder Tragausleger 42 mit einer Aufrichtfeder 43 gekoppelt, deren Rückstellkraft die Ausleger 42 aufrichtet und die Wippe 44 mit einem definierten Druck gegen die Fahrdrähte 10 anhebt. Die Ausleger 42 bzw. 51 sind auch jeweils um eine vertikale Achse drehbar, so dass die Wippe 44 eine quer zur Fahrtrichtung 34 des Fahrzeugs 30 gerichtete Schwenkbewegung 53 ausführen kann. Die Schwenkbewegung 53 wird durch einen beispielsweise an der Plattform 41 befestigten Stellantrieb 50 eingestellt, dessen Drehbewegung 52 vom Stellausleger 51 auf die Wippe 44 übertragen wird.

Die Wippe 44 des Stromabnehmers 40 weist je Fahrdraht 10 zwei in Fahrtrichtung 34 hintereinander angeordnete Schleifleisten 45 auf. Die Schleifleisten 45 sind quer zur Fahrtrichtung 34 ausgerichtet und weisen einen zum Beschleifen des Fahrdrahtes 10 vorgesehenen Soll-Arbeitsbereich auf.

Gemäß FIG 1 bis FIG 4 ist der Stromabnehmer 40 in einem Übergangsbereich von einer Fahrerkabine 31 zu einem Ladeaufbau 32 am Fahrzeug 30 angelenkt. Dabei sind Trag- und Stellausleger 42 bzw. 51 nach vorne, also gegen die Fahrtrichtung 34 unter einem spitzen Winkel aufgestellt. Die Ausleger 42 bzw. 51 erstrecken sich daher bei abgesenkter Wippe 44 von Fahrzeug 30 zu Wippe 44 in Fahrtrichtung 34. Bei Kontaktierung der Fahrdrähte 10 durch die Wippe 44 wird diese durch die Ausleger 42 bzw. 51 unter Schleifkontakt mit den Fahrdrähten 10 geschoben. In dieser vorteilhaften Anordnung des Stromabnehmers 40 nimmt dieser keinen Bauraum im Bereich des Ladeaufbaus 32 ein.

Nicht dargestellt ist eine Regelungseinrichtung, die in Kombination mit einem ebenfalls nicht dargestellten Lagesensor und dem Stellantrieb 50 eine Schwenkbewegung 53 des Stromabnehmers 40 bewirkt, um Spurungenauigkeiten während der Fahrt des Fahrzeugs 30 in der Art auszugleichen, dass die Schleifleisten 45 die Fahrdrähte 10 der Oberleitung stets innerhalb ihres Soll-Arbeitsbereiches kontaktieren. Hierzu erfasst der Lagesensor eine Ist-Lage des Fahrzeugs 30 relativ zu den Fahrdrähten 10. Der Lagesensor kann beispielsweise als fahrzeugfeste Videokamera ausgebildet sein, die durch Vergleich mit Referenzbildern die Ist-Lage ermittelt. In der Regelungseinrichtung findet fortwährend ein Vergleich der erfassten Ist-Lage mit einer vorgegebenen Soll-Lage des Fahrzeugs 30 relativ zu den Fahrdrähten 10 statt. Aus den Abweichungen zwischen Ist- und Soll-Lage des Fahrzeugs 30 wird eine Stellgröße für die Wippe 44 bestimmt, um durch Schwenken der Wippe 44 den Kontakt zwischen Schleifleisten 45 und Fahrdraht 10 stets in deren Soll-Arbeitsbereich zu halten. Mit besonderem Vorteil kann die Regeleinrichtung den Stellantrieb 50 derart ansteuern, dass durch eine pendelnde Schwenkbewegung der Wippe 44 die Schleifleisten 45 auf ihrem Arbeitsbereich gleichmäßig abgeschliffen werden. Hierdurch kann auf die aus der Schienenverkehrstechnik bekannte Zickzackführung der Oberleitungsdrähte verzichtet werden.

Insgesamt stellt die Erfindung ein nicht schienengebundenes Fahrzeug 30 bereit, dessen Stromabnehmer 40 auch bei Fahrgeschwindigkeiten von bis zu 100 km/h sicher an die Fahrdrähte 10 der Oberleitung an- und abdockbar ist und der Spurungenauigkeiten während der Fahrzeugfahrt durch seitliche Schwenkbewegungen 53 permanent ausgleicht. Der Stromabnehmer 40 ist insbesondere gegenüber den von O-Bussen bekannten Stangenstromabnehmern 40', die gemäß FIG 4 in Fahrtrichtung 34 nachgezogen werden, verschleißarm, leichtgängig und ohne wesentliche Krafteinwirkung auf die Fahrdrähte 10 an- und abdrahtbar. Der Stromabnehmer 40 ist des Weiteren fähig, Segmentgrenzen der Oberleitung zu überwinden. Im Vergleich zu O-Bussen haben Lastkraftwagen 30 einen wesentlich geringeren vertikalen Abstand zwischen Ladeaufbau 32 und Fahrdraht 10, so dass der Stromabnehmer 40 im abgesenkten Übergangsbereich zur Fahrerkabine 31 angeordnet werden kann, ohne mit dem Ladeaufbau 34 zu kollidieren. Dies wird durch die unkonventionell nach vorne - also in Fahrtrichtung 34 - ausgerichteten Ausleger 42 bzw. 51 des Stromabnehmers 40 erreicht.

## Patentansprüche

1. Nicht schienengebundenes Fahrzeug (30), insbesondere Lastkraftwagen, mit einem Stromabnehmer (40) zur Einspeisung elektrischer Energie aus einer zweipoligen Oberleitung, deren als Hin- und Rückleiter ausgebildete Fahrdrähte (10) jeweils durch mindestens eine Schleifleiste (45) des Stromabnehmers (40) kontaktierbar sind, wobei der Stromabnehmer (40) zwei Tragausleger (42) aufweist, die jeweils am Fahrzeug (30) und an einer die Schleifleisten (45) tragenden Wippe (44) derart kipp- und schwenkbar angelenkt sind, dass die Wippe (44) sowohl anheb- und absenkbar als auch quer zur Fahrtrichtung (34) bewegbar ist, **dadurch gekennzeichnet, dass** der Stromabnehmer (40) in einem Übergangsbereich von einer Fahrerkabine (31) zu einem Ladeaufbau (32) am Fahrzeug (30) angelenkt ist, wobei die Tragausleger (42) sich vom Fahrzeug (30) zur abgesenkten Wippe (44) in Fahrtrichtung (34) erstrecken und bei Kontaktierung der Fahrdrähte (10) durch die Wippe (44) mit der Fahrtrichtung (34) einen spitzen Winkel einschließen.

2. Nicht schienengebundenes Fahrzeug (30) nach Anspruch 1, wobei der Stromabnehmer (40) einen Stellausleger (51) aufweist, der parallel zu den Tragauslegern (42) an Fahrzeug (30) und Wippe (44) jeweils kipp- und schwenkbar angelenkt und fahrzeugseitig derart an einen Stellantrieb (50) gekoppelt ist, dass durch diesen der Stellausleger (51) und damit die Wippe (44) seitlich schwenkbar ist.

3. Nicht schienengebundenes Fahrzeug (30) nach Anspruch 1 oder 2, wobei die Wippe (44) je Fahrdraht (10) zwei in Fahrtrichtung (34) hintereinander angeordnete Schleifleisten (45) aufweist, die quer zu Fahrtrichtung (34) ausgerichtet sind und einen zum Beschleifen des Fahrdrahtes (10) vorgesehenen Soll-Arbeitsbereich aufweisen.

4. Nicht schienengebundenes Fahrzeug (30) nach Anspruch 2 oder 3, wobei der Stellausleger (51) sich vom Fahrzeug (30) zur abgesenkten Wippe (44) in Fahrtrichtung (34) erstrecken und bei Kontaktierung der Fahrdrähte (10) durch die Wippe (44) mit der Fahrtrichtung (34) einen spitzen Winkel einschließen.

5. Nicht schienengebundenes Fahrzeug (30) nach einem der Ansprüche 1 bis 4, wobei jeder Tragausleger (42) mit einer Aufrichtfeder (43) gekoppelt ist, deren Rückstellkraft die Wippe (44) anhebt und die Schleifleisten (45) an die Fahrdrähte (10) drückt.

6. Nicht schienengebundenes Fahrzeug (30) nach einem der Ansprüche 1 bis 5, mit einem Lagesensor zur Erfassung einer Ist-Lage des Fahrzeugs (30) relativ zu den Fahrdrähten (10).

7. Nicht schienengebundenes Fahrzeug (30) nach Anspruch 6, mit einer Regelungseinrichtung, die dazu ausgebildet ist, aus einem Vergleich der erfassten Ist-Lage mit einer vorgegebenen Soll-Lage des Fahrzeugs (30) relativ zu den Fahrdrähten (10) eine Stellgröße für die Wippe (44) zu bestimmen, welche eine Kontaktierung der Fahrdrähte (10) innerhalb eines Arbeitsbereiches der Schleifleisten aufrecht erhält, und den Stellantrieb (50) entsprechend der bestimmten Stellgröße anzusteuern.

8. Nicht schienengebundenes Fahrzeug (30) nach Anspruch 7, wobei die Regeleinrichtung dazu ausgebildet ist, den Stellantrieb (50) derart anzusteuern, dass durch eine pendelnde Schwenkbewegung der Wippe (44) die Schleifleisten (45) auf ihrem Arbeitsbereich gleichmäßig abgeschliffen werden.

## Claims

1. Non-rail-bound vehicle (30), in particular a truck or bus, with a current collector (40) for feeding in electrical energy from a two-pole overhead conductor, the contact wires (10) of which are in the form of forward and return conductors, each of which can be contacted by at least one sliding shoe (45) on the current collector (40), wherein the current collector (40) has two support booms (42), each of which is articulated, on the vehicle (30) and on a rocker (44) on which are mounted the sliding shoes (45), so that it can tilt and pivot in such a way that the rocker (44) can be both raised and lowered and also is able to move at an angle to the direction of travel (34), **characterised in that** the current collector (40) is articulated onto the vehicle (30) in a transitional area from a driver's cab (31) to a load body (32), wherein the support booms (42) extend from the vehicle (30) to the lowered rocker (44) in the direction of travel (34) and enclose an acute angle with the direction of travel (34) when the rocker (44) is contacting the contact wires (10).

2. Non-rail-bound vehicle (30) according to claim 1, wherein the current collector (40) has a positioning boom (51) which is articulated both on the vehicle (30) and on the rocker (44), in such a way that it can tilt and pivot parallel to the support booms (42), and at the vehicle end is coupled to a positioning drive (50) in such a way that the latter can pivot the positioning boom (51), and with it the rocker (44), sideways.

3. Non-rail-bound vehicle (30) according to claim 1 or 2, wherein the rocker (44) has for each contact wire (10) two sliding shoes (45) arranged one behind the other in the direction of travel (34), which are aligned across the direction of travel (34) and have a planned working range for sliding along the contact wire (10).

4. Non-rail-bound vehicle (30) according to claim 2 or 3, wherein the positioning boom (51) extends from the vehicle (30) to the lowered rocker (44) in the direction of travel (34), and when the rocker (44) is contacting the contact wires (10) encloses an acute angle with the direction of travel (34).

5. Non-rail-bound vehicle (30) according to one of the claims 1 to 4, wherein each support boom (42) is coupled to an elevating spring (43), the restoring force of which raises the rocker (44) and presses the sliding shoes (45) against the contact wires (10).

6. Non-rail-bound vehicle (30) according to one of the claims 1 to 5, with a position sensor for detecting the actual position of the vehicle (30) relative to the contact wires (10).

7. Non-rail-bound vehicle (30) according to claim 6, with a regulation facility which is designed to determine a setpoint variable for the rocker (44) from a comparison of the actual position of the vehicle (30) as detected and a predefined target position, relative to the contact wires (10), which would maintain contact with the contact wires (10) correctly within a working range of the sliding shoes, and to actuate the positioning drive (50) in accordance with the setpoint variable which has been determined.

8. Non-rail-bound vehicle (30) according to claim 7, wherein the regulation facility is designed to actuate the positioning drive (50) in such a way, by a to-and-fro pivoting movement of the rocker (44), that the sliding shoes (45) are worn down uniformly across their working range.

## Revendications

1. Véhicule (30) non ferroviaire, notamment camion, comprenant un pantographe (40) d'injection d'énergie électrique à partir d'une ligne de contact bipolaire dont les fils (10) de contact, constitués en conducteur aller et conducteur retour, peuvent être mis en contact respectivement par au moins une réglette (45) de frottement du pantographe (40), le pantographe (40) ayant deux bras (42) porteurs, qui sont articulés de manière à pouvoir pivoter et basculer au véhicule (30) et à un archet (44) portant les réglettes (45) de frottement, de manière à ce que l'archet (44) puisse tant être soulevé et abaissé, qu'également être déplacé transversalement à la direction (34) de marche, **caractérisé en ce que** le pantographe (40) est, dans une partie de transition d'une cabine (31) de conducteur à une superstructure (32) de chargement, articulé au véhicule (30), les bras (42) porteurs s'étendant, dans la direction (34) de marche, du véhicule (30) à l'archet (44) abaissé et faisant, lors de la mise en contact des fils (10) de contact par l'archet (44), un angle aigu avec la direction (34) de marche.

2. Véhicule (30) non ferroviaire suivant la revendication 1,
dans lequel le pantographe (40) a un bras (51) de réglage, qui peut, parallèlement aux bras (42) porteurs, être articulé de manière à pouvoir basculer et pivoter au véhicule (30) et à l'archet (44), et qui est couplé, du côté du véhicule, à un organe (50) moteur, de manière à ce que, par celui-ci, le bras (51) de réglage et ainsi l'archet (44) peuvent pivoter latéralement.

3. Véhicule (30) non ferroviaire suivant la revendication 1 ou 2,
dans lequel l'archet (44) a, pour chaque fil (10) de contact, deux réglettes (45) de frottement, qui sont disposées l'une derrière l'autre dans la direction (34) de marche, qui sont dirigées perpendiculairement à la direction (34) de marche et qui ont une plage de travail de consigne prévue pour balayer le fil (10) de contact.

4. Véhicule (30) non ferroviaire suivant la revendication 2 ou 3,
dans lequel le bras (51) de réglage s'étend, dans la direction (34) de marche, du véhicule (30) à l'archet (44) abaissé et lors de la mise en contact des fils (10) de contact par l'archet (44), fait un angle aigu avec la direction (34) de marche.

5. Véhicule (30) non ferroviaire suivant l'une des revendications 1 à 4,
dans lequel chaque bras (42) porteur est couplé à un ressort (43) de montée, dont la force de rappel soulève l'archet (44) et pousse les réglettes (45) de frottement sur les fils (10) de contact.

6. Véhicule (30) non ferroviaire suivant l'une des revendications 1 à 5, comprenant un capteur de position, pour détecter une position réelle du véhicule (30) par rapport aux fils (10) de contact.

7. Véhicule (30) non ferroviaire suivant la revendication 6, comprenant un dispositif de réglage constitué pour, à partir d'une comparaison entre la position réelle détectée et une position de consigne donnée à l'avance du véhicule (30), par rapport aux fils (10) de contact, déterminer une grandeur de réglage de l'archet (44), lequel maintient une mise en contact des fils (10) de contact dans une plage de travail des réglettes de frottement et commande l'organe (50) moteur conformément à la grandeur de réglage déterminée.

8. Véhicule (30) non ferroviaire suivant la revendication 7,
dans lequel le dispositif de réglage est constitué pour commander l'organe (50) moteur, de manière à ce que, par un mouvement de basculement pendulaire de l'archet (44), les réglettes (45) de frottement frottent uniformément sur leur plage de travail.
